## Europäisches Patentamt

## European Patent Office

## Office européen des brevets

(11) Publication number: **0 178 825**
**B1**

## (12) EUROPEAN PATENT SPECIFICATION

(45) Date of publication of patent specification: **11.05.88**

(51) Int. Cl.⁴: **A 22 C 21/06**

(21) Application number: **85307091.0**

(22) Date of filing: **03.10.85**

(54) A device for clearing the neck skin of slaughtered poultry.

(30) Priority: **16.10.84 DK 4944/84**

(43) Date of publication of application:
**23.04.86 Bulletin 86/17**

(45) Publication of the grant of the patent:
**11.05.88 Bulletin 88/19**

(84) Designated Contracting States:
**AT BE CH DE FR GB IT LI NL SE**

(56) References cited:
**GB-A-1 072 158**
**NL-A-8 303 633**
**US-A-4 208 764**

(73) Proprietor: **LINDHOLST & CO. A/S**
**No. 9 Vestermollevej**
**DK-8280 Trige (DK)**

(72) Inventor: **Lindholst, Jorgen**
**No. 14 Bekkasinvej**
**DK-8382 Hinnerup (DK)**

(74) Representative: **Lerwill, John et al**
**A.A. Thornton & Co. Northumberland House**
**303-306 High Holborn**
**London, WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a device for clearing the neck skin of slaughtered poultry after its intestinal set has been removed through an opening in the belly, said device comprising in a known manner a mandrel provided with forwardly directed projections and being adapted to be rotated and forwardly displaced through the belly opening and the neck hole of the poultry body in order to seize and remove the intestinal remains united with the neck skin, in particular the wind pipe and the gullet with craw that are removed from the foremost part of the mandrel projecting through the neck hole prior to or simultaneously with its being withdrawn.

A device of this kind is known from the published Danish Patent Application No. 4860/82 (NL—A—8303633) the drawing of which illustrates the mandrel as an externally smooth tubing with a foremost end edge portion which between equidistant notches is provided with serrated lobes directed substantially axially forwardly, but which, however, at the same time point a little outwardly so that the end portion of the mandrel has a diameter slightly increasing towards the end edge. By using this device the intestinal remains may be effectively seized and safely held by the lobes during the forwardly pushing movement of the mandrel but, on the other hand, they can be easily released from the lobes after these have fully penetrated the neck hole. It is however a drawback that the lobes in certain cases also catch the collar bone of the poultry body, thereby tearing off splinters or possibly breaking the bone at one or more points.

It involves the same risk when using a mandrel known from Danish published Patent Specification No. 144,293 (US—A—4208764) which at its external side is provided with rows of radially projecting protuberances with recesses or channels extending between the rows and communicating with a vacuum source. Said mandrel acts approximately as a milling cutter or a reamer when penetrated through the neck hole of the poultry body and although it is the intention that the projections get clear of the collar bone this will not always be the case.

It is a purpose of the invention to provide a device as stated above comprising a mandrel whose projections on the one hand provide for efficiently clearing intestinal remains from the neck skin—said remains being seized by the projections and wrapped round the mandrel that may, however, again be easily freed from the remains after the final clearing of the neck skin——but, on the other hand, due to their design and positioning minimize or eliminate the risk of such a damage to the neck bone that the poultry cannot be sold as a first-class article of food.

This processing of the poultry which is both effective and gentle is according to the invention made possible in that the projections are constituted by one or more rows of tongues disposed axially behind each other and pointing obliquely forwards and in the direction of rotation of the mandrel, each tongue tapering to a point, each of said points being located on or within a cylindric surface the directrix of which is formed by the largest circumference of a blunt, foremost end portion of the mandrel.

Said end portion so to say clears the way for the mandrel during its forward movement as said end portion according to requirement pushes the collar bone to the one side or the other so that the bone may slide off on the succeeding tongues without thereby being broken or damaged. Also the intestinal remains may temporarily be laterally displaced by the end portion of the mandrel, but due to their soft and limp consistency they are easily caught by the tongues, in particular their points, and are thus forced to cling or wrap round the mandrel during its rotational movement so that they are finally drawn free from the neck skin.

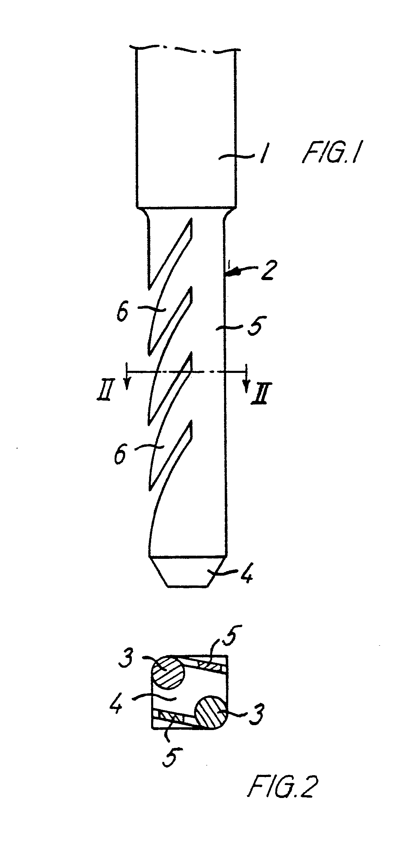

An embodiment of a mandrel for the device according to the invention is illustrated on the drawing by a lateral view and by a cross-sectional view, resp., along the line II—II in Fig. 1.

The illustrated mandrel comprises a shaft 1 and an active portion 2. The shaft 1 may be solid or hollow and is adapted to be mounted on a rotating and displaceable spindle in a device not shown, which further comprises a holder or supporting plates for securing the poultry body whose neck skin is to be cleared.

In the illustrated embodiment the active portion of whe mandrel is composed of two parallel pieces of round steel 3, Fig. 2, which at the top are secured to the shaft 1 and at the bottom are provided with a blunt, for instance spherical or truncated-cone-shaped end portion 4 whose primary function is stated above.

A piece of plate 5 is further secured to either of the round steels 3, the longitudinal edge portion of said piece of plate being slotted or cut so as to form a row of successive tongues 6 pointing obliquely forwards (downwards) and in the direction of rotation of the mandrel and tapering to points which sectionally, Fig. 2, are located on or within the largest circumference of the end portion 4.

By this construction the active portion of the mandrel gets a substantially square cross-section with the tongue points approximately at two opposite corners, but the said portion of the mandrel may as well be a slotted tubing of round or polygonal cross-section.

## Claims

1. A device for clearing the neck skin of slaughtered poultry after its intestinal set has been removed through an opening in the belly, comprising a mandrel (1, 2) provided with forwardly directed projections (6) and being adapted to be rotated and forwardly displaced through the belly opening and the neck hole of the poultry body in order to seize and remove the intestinal remains united with the neck skin, in particular the wind

pipe and the gullet with craw that are removed from the foremost part of the mandrel projecting through the neck hole prior to or simultaneously with its being withdrawn, characterized in that the projections are constituted by one or more rows of tongues (6) disposed axially behind each other and pointing obliquely forwards and in the direction of rotation of the mandrel (1, 2) each tongue tapering to a point, each of said points being located on or within a cylindric surface the directrix of which is formed by the largest circumference of a blunt, foremost end portion (4) of the mandrel.

2. A device as claimed in claim 1, characterized in that the active portion (2) of the mandrel consists of two parallel pieces of round steel (3) to which the blunt end portion (4) is secured and either of which individually is provided with a piece of plate (5) in which the tongues (6) are cut out.

**Patentansprüche**

1. Vorrichtung zur Reinigung der Halshaut von Schlachtgeflügel nach Herausnahme seiner Eingeweide durch eine Öffnung im Bauch, umfassend einen mit vorwärts gerichteten Vorsprüngen (6) versehenen Dorn (1, 2), der rotierbar und vorwärts durch die Bauchöffnung und das Halsloch des Geflügelkörpers verschiebbar ist, um die mit der Halshaut verbundenen Eingeweidereste, insbesondere die Luftröhre und die Speiseröher mit Kropf, zu fassen und entfernen, die dem durch das Halsloch hervorragenden vorderen Teil des Dorns vor oder gleichzeitig mit dessen Zurückziehen entfernt werden, dadurch gekennzeichnet, dass die Vorsprünge aus einer oder mehreren Reihen von hintereinander axial angeordneten und schräg vorwärts und in die Rotations-richtung des Dorns zeigenden Zungen (6) ausgebildet sind, wobei jede Zunge mit einer Spitze endet, welche Spitzen sich an oder innerhalb einer Zylinderfläche befinden, deren Leitkurve von dem grössten Umkreis eines stumpfen, vorderen Endteils (4) des Dorns gebildet wird.

2. Vorrichtung nach Anspruch 1, dadurch gekennzeichnet, dass der aktive Teil (2) des Dorns aus zwei parallelen Stücken Rundstahl (3) besteht, an denen der stumpfe Endteil (4) befestigt ist, und die je für sich mit einem Plattenstück (5) versehen sind, in dem die Zungen (6) ausgeschnitten sind.

**Revendications**

1. Dispositif de nettoyage de la peau du cou de volailles abattues après sortie des intestins par une ouverture dans le ventre, et comprenant un mandrin (1, 2), pourvu de saillies (6) orientées vers l'avant et conçu pour être tourné et déplacé vers l'avant par l'ouverture de ventre et le trou du cou du corps de la volaille pour saisir et extraire les restes des intestins attachés à la peau du cou, notamment la trachée et l'oesophage avec jabot qui sont enlevés de la partie avant du mandrin faisant saillie du trou du cou, avant ou simultanément avec son retrait, caractérisé en ce que les saillies sont constituées par une ou plusieurs rangées de languettes (6) disposées axialement l'une après l'autre et orientées obliquement vers l'avant et dans la direction de rotation du mandrin (1, 2), chaque languette s'amincissant vers un point, chacun de ces points étant placé sur ou à l'intérieur d'une surface cylindrique, dont la courbe directrice est la circonférence la plus grande d'une partie extrême avant tronquée (4) du mandrin.

2. Dispositif selon la revendication 1, caractérisé en ce que la partie active (2) du mandrin consiste en deux pièces parallèles de rond d'acier (3) auxquelles est fixée la partie extrême tronquée (4) et dont chacune est pourvue d'une plaquette (5) dans laquelle les languettes (6) sont découpées.

FIG.1

FIG.2